# EUROPEAN PATENT SPECIFICATION

(11) **EP 0 433 912 B1**
(45) Date of publication and mention of the grant of the patent: **02.06.1993**
(21) Application number: 90124251.1
(22) Date of filing: 14.12.1990
(51) Int. Cl.: B60K 17/00, B60K 5/12

(54) **Device for mounting power unit onto the chassis of an industrial vehicle**
Vorrichtung zur Montage einer Antriebseinheit an einen Nutzfahrzeugrahmen
Dispositif de montage d'une unité de puissance sur le châssis d'un véhicule industriel

(30) Priority: 21.12.1989 IT 5356989 U
(43) Date of publication of application: 26.06.1991
(73) Proprietor: IVECO FIAT S.p.A., 10156 Torino (IT)
(72) Inventor: Riva, Vittorio, I-10100 Torino (IT)
(74) Representative: Jorio, Paolo, Dr. Ing.

(56) References cited:
- FR-A- 1 148 688
- US-A- 1 817 633
- US-A- 1 818 715

## Description

The present invention relates to a device for mounting the power unit onto the chassis of an industrial vehicle, including two side supports connected to each other by at least one cross member to support said unit, as specified in the preamble of claim 1.

As is well known, in industrial vehicles the power unit, which includes the engine, clutch and gear box, is fixed to suspension spring blocks which are fixed to the chassis in a removable manner, for example using bolts, so as to allow the maintenance or repair of the various unit components.

In some models used for industrial vehicles, the side supports are fixed by two side members, whereas the spring blocks are fixed onto separate supports joined to a cross member, which is then bolted onto the side supports. In order to remove the power unit from the chassis it is therefore necessary to disassemble the cross member from the chassis.

This well-known device for mounting the power unit is hampered by the fact that, during both the disassembly and the assembly of the unit, since the cross member has been removed, the loads on the chassis side members are unbalanced. The supports and/or side members are therefore liable to become deformed (i.e. through flexing or twisting), due to the weight of the engine on a single side member and the weight of possible other structures joined to the outside of the side member which is no longer weighted down by the engine.

The object of the present invention is to produce a device for mounting the power unit which eliminates the said inconvenience and allows the unit to be easily assembled and disassembled.

To this end a mounting device according to the present invention is characterised by the features specified in the characterising part of claim 1.

For a better understanding of the invention, a preferential exemplary method for realising the invention is described with the aid of the accompanying drawings, wherein:
Figure 1 is a partial section of a vehicle chassis with the power knit assembled using the assembly device described in the present invention;
Figure 2 is a sectional view on an enlarged scale along the line II-II shown in Figure 1;
Figure 3 is the exploded version of the section shown in Figure 2.

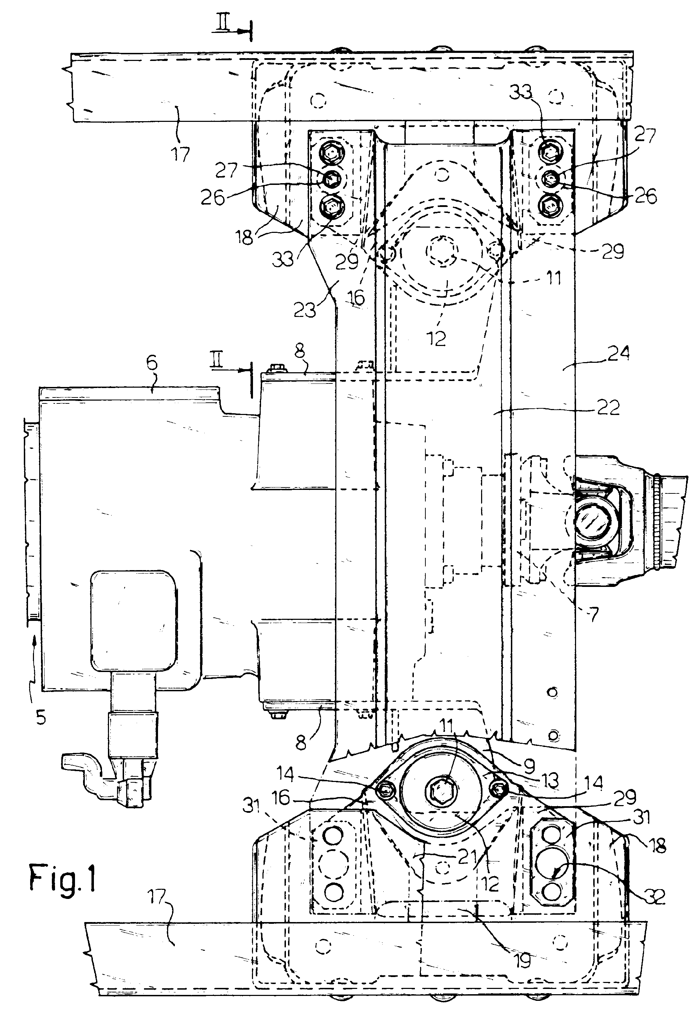

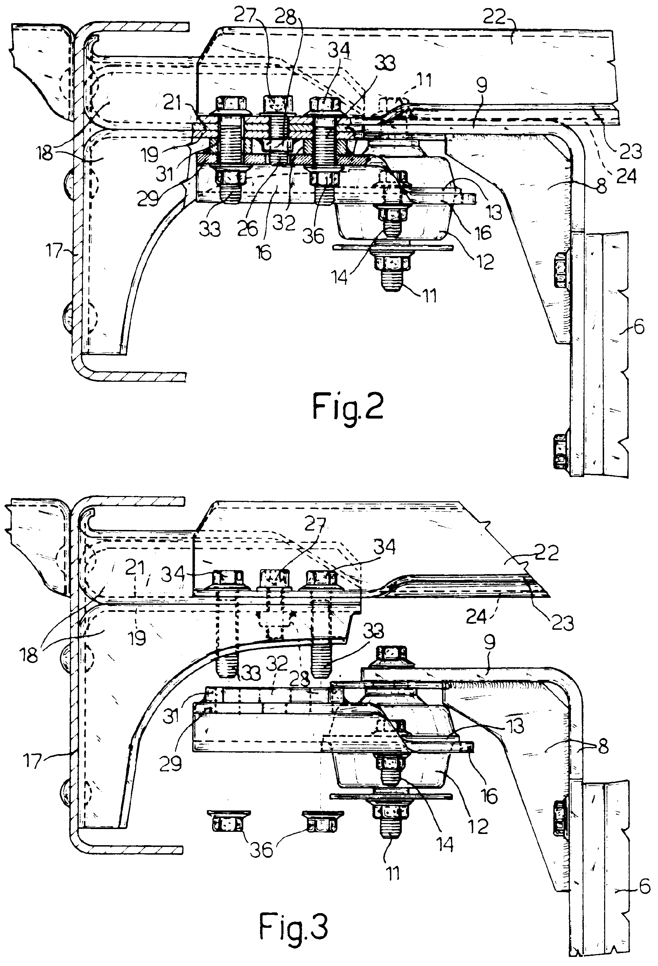

Referring to Figure 1, number 5 generically refers to the power unit of an industrial vehicle, which includes the gear box 6, whose driving shaft is integral posterior to a transmission flange 7 which is engaged using the normal friction clutch, not shown in the figure. Two squares 8 are fixed on the two sides of the gear box 6 (Fig.2) and each has an horizontal upper arm 9. A well-known bull's eye spring block 12 is fixed onto this arm 9 using a sturdy bolt 11. Each block 12 is fitted with a middle flange 13 which is fixed by two bolts 14 onto a strong plate 16 which is described more fully below.

The vehicle is fitted with a load-bearing chassis comprising two strong side members 17 (Figure 1) joined by several cross members. A bracket or support, which is generically indicated as 18, is fixed onto each side member 17, which includes two horizontal and matching plates 19 and 20, creating a side support for the gear box 6.

The normal cross bar support 22 for the gear box 6 is joined to the two support 18. The cross bar support 22 is equipped with two flanges 23 and 24 (Figure 1), whose extreme ends match the upper plate 21 of the two supports 10 and can be fixed by a couple of joining bolts 26 onto the corresponding side support 19, 21.

The bolts 26 are inserted through the holes in flanges 23 and 24 and the plates 19 and 21. The holes for each pair of bolts 26 are aligned longitudinally, or in other words are parallel to the vehicle axis. Each bolts 26 has a socket head 27 (Figure 2 and 3), namely with a prismatic screwing cavity, and is tightened onto plates 19 and 21 using a nut 28 which is welded onto the lower part of plate 19.

Each plate 16 has two flanges 29 which are folded upwards, and onto which a spacer 31 is welded. This matches the lower plate 19 on the relative support 18 and has a compartment 32 to house the nut 28 integral with plate 19.

Each flange 29 of plate 16 is joined to the chassis by a corresponding pair of additional strengthening bolts 33 which pass through the corresponding holes in the flange 23, 24, plates 21 and 19, spacer 31 and flange 29. The holes for each pair of bolts 33 (Figure 1) are transversely aligned and placed symmetrically to the hole of the corresponding bolt 26 on the cross member 22. Each bolt 33 has an hexagonal head 34 which is tightened, using a corresponding nut 36, on the pack formed by flange 29, spacer 31, plates 19 and 21 and flanges 23, 24. To remove the gear box 6 from the chassis it is sufficient to unscrew nuts 36 from the strengthening bolts 33 on each plate 16. The bolts 26, which are tightened by their respective nuts 28, keep the cross member 22 fixed to the supports 18. Since the bolts 26 have a socket head 27, which differs from the head 34 of the strengthening bolts 33, there is no risk that the mechanic might unscrew the bolt 26 from the cross member 22 by mistake.

It is clear from the above that the mounting device described in the present invention has several advantages compared to other well-known structures. In fact, in the above-mentioned device, during the removal and reassembly of the power unit 5 onto the chassis, the two side members 17 remain rigidly joined by the cross member 22. Therefore, no excessive unbalancing of weights occurs either on the supports 18, or on the side members 17, thus avoiding any deformation or twisting of the chassis.

It is the intention to make various changes and modifications to the above assembly device wihout departing from the general concept of the invention. For example, the form of plate 16 and support 18 may be altered, or the relative position of bolts 26 and 33. In addition, each support 18 may be made from a single horizontal sheet, instead of from two matching sheets.

## Claims

1. A device for mounting the power unit onto the chassis of an industrial vehicle, including two side supports (18) connected to each other by at least one cross member (22) to support said unit (5), and wherein said unit (5) is secured to a couple of spring blocks (12) adapted to be removably joined to said chassis, characterised in that said cross member (22) is joined to each of said side supports (18) by at least a pair of joining bolts (26), and each of said spring blocks (12) is joined to said cross member (22) by a series of additional bolts (33) independent of said pair of joining bolts (26), enabling said unit (5) and said spring blocks (12) to be bodily removed from said side supports (18) independently of said cross member (22).

2. A device according to Claim 1, wherein each one of said side supports is formed by a bracket (18) fixed onto a corresponding side member (17) of said vehicle, characterised in that said pair of joining bolts (26) are substantially aligned longitudinally, and are each one associated with a couple of said additional bolts (33), which are symmetrically located with respect to the associated joining bolt (26) and are aligned transversely therewith.

3. A device according to Claim 1 or 2, characterised in that each said joining bolt (26) is provided with a head (27) having a size and/or a shape different of a head (34) provided onto each said additional bolt (33).

4. A device according to Claim 1 or 2, characterised in that each one of said joining bolts (26) is provided with a socket head (27) and is screwed onto a nut (28) to join said cross member (22) with said side supports (18), said additional bolts (33) having a hexagonal head (34) and being screwed each one onto a corresponding nut (36) to join each said spring block (12) to said cross member (22) and to the corresponding side support (18).

5. A device according to Claims 2 and 4, characterised in that each one of said brackets (18) is provided with at least one horizontal plate (19, 21) which matches upwards a portion (23, 24) of said cross member (22), each one of said spring blocks (12) being fixed to a structure (16, 29), said plate (19, 21) matching downwards a zone (29) of said structure (16, 29).

## Patentansprüche

1. Vorrichtung zur Montage der Antriebseinheit an einem Nutzfahrzeug-Rahmen, mit zwei Seitenstützen (18), die miteinander durch wenigstens eine Traverse (22) zum Abstützen der Einheit (5) verbunden sind, wobei die Einheit (5) an zwei Federblöcken (12) befestigt ist, die lösbar mit dem Rahmen verbunden sind, dadurch **gekennzeichnet**, daß die Traverse (22) mit den beiden Seitenstützen (18) durch wenigstens zwei Verbindungsbolzen (26) verbunden ist, und daß jeder der Federblöcke (12) mit der Traverse (22) durch eine Reihe von zusätzlichen Bolzen (33) verbunden ist, die unabhängig von den beiden Verbindungsbolzen (26) sind, so daß die Einheit (5) und die Federblöcke (12) von den Seitenstützen (18) unabhängig von der Traverse (22) entfernt werden können.

2. Vorrichtung nach Anspruch 1, bei der jede Seitenstütze durch einen Ansatz (18) gebildet ist, der an einem entsprechenden Seitenglied (17) des Fahrzeugs befestigt ist, dadurch **gekennzeichnet,** daß die beiden Verbindungsbolzen (26) im wesentlichen in Längsrichtung ausgerichtet sind und jeweils einem Paar der zusätzlichen Bolzen (33) zugeordnet sind, die symmetrisch in bezug auf die zugehörigen Verbindungsbolzen (26) angeordnet und in Querrichtung mit diesen ausgerichtet sind.

3. Vorrichtung nach Anspruch 1 oder 2, dadurch **gekennzeichnet**, daß die beiden Verbindungsbolzen (26) mit einem Kopf (27) versehen sind, der eine Größe und/oder eine Form aufweist, die sich von dem Kopf (34) auf den zusätzlichen Bolzen (33) unterscheidet.

4. Vorrichtung nach Anspruch 1 oder 2, dadurch **gekennzeichnet**, daß jeder der Verbindungsbolzen (26) mit einem Zylinderkopf (27) mit Innenaussparung versehen und in eine Mutter (28) geschraubt ist, damit die Traverse (22) mit den Seitenstützen (18) verbunden ist, wobei die zusätzlichen Bolzen (33) einen Sechseckkopf (34) aufweisen und in eine entsprechende Mutter (36) geschraubt sind, damit die beiden Federblöcke (12) mit der Traverse (22) und der entsprechenden Seitenstütze (18) verbunden sind.

5. Vorrichtung nach Anspruch 2 und 4, dadurch **gekennzeichnet,** daß jeder der Ansätze (18) mit wenigstens einer waagerechten Platte (19,21) versehen ist, die aufwärts mit einem Bereich (23,24) der Traverse (22) zusammenpaßt, wobei jeder der Federblöcke (12) an einer Konstruktionseinheit (16,29) befestigt ist, welche Platte (19, 21) abwärts mit einem Bereich (29) der Konstruktionseinheit (16,29) zusammenpaßt.

## Revendications

1. Un dispositif pour le montage du groupe moteur ou unité de puissance sur le châssis d'un véhicule industriel, comprenant deux supports latéraux (18) reliés mutuellement par, au moins, une traverse d'entretoisement (22) pour supporter ledit groupe moteur (5), et dans lequel ledit groupe moteur (5) est fixé par une paire de blocs de montage élastiques ou silentblocs (12) agencés pour être montés de façon amovible sur ledit châssis, caractérisé en ce que ladite traverse (22) est fixée sur chaque support latéral (18) par, au moins, une paire de boulons de montage (26), et que chaque paire de silentblocs (12) est fixée sur ladite traverse (22) par une série de boulons supplémentaires (33), indépendants de ladite paire de boulons de montage (26), de manière à permettre le démontage monobloc dudit groupe moteur (5) et desdits silentblocs (12) desdits supports latéraux (18), indépendamment de ladite traverse (22).

2. Un dispositif selon la revendication 1, dans lequel chacun desdits supports latéraux est constitué par une équerre (18) fixée sur le longeron correspondant (17) dudit véhicule, caractérisé en ce que ladite paire de boulons de montage (26) est sensiblement alignée longitudinalement et que chacun d'eux est associé à une paire desdits boulons supplémentaires (33) disposés symétriquement par rapport au boulon de montage associé (26) et alignés transversalement avec celui-ci.

3. Un dispositif selon la revendication 1 ou 2, caractérisé en ce que chacun desdits boulons de montage (26) est pourvu d'une tête (27) dont les dimensions et/ou la forme sont différentes de la tête (34) prévue sur chaque boulon auxiliaire (33).

4. Un dispositif selon la revendication 1 ou 2, caractérisé en ce que chacun desdits boulons de montage (26) est pourvu d'une tête à six pans creux (27) et est vissé dans un écrou (28) pour fixer ladite traverse (22) sur lesdits supports latéraux (18), lesdits boulons supplémentaires (33) ayant une tête hexagonale (34) et étant chacun vissé dans un écrou correspondant (36) pour fixer chaque silentbloc (12) sur ladite traverse (22) et sur le support latéral correspondant (18).

5. Un dispositif selon les revendications 2 ou 4, caractérisé en ce que chaque équerre (18) est pourvue, au moins, d'une plaque horizontale (19, 21) s'adaptant vers le haut sur une partie (23, 24) de ladite traverse (22), chacun desdits silentblocs (12) étant fixé sur une structure (16, 29), ladite plaque (19, 21) s'adaptant vers le bas sur une zone (29) de ladite structure (16, 29).
